Europäisches Patentamt

European Patent Office

Office européen des brevets

(19)

(11) Veröffentlichungsnummer : **0 366 943 B1**

# (12) EUROPÄISCHE PATENTSCHRIFT

(45) Veröffentlichungstag der Patentschrift :
**11.11.92 Patentblatt 92/46**

(51) Int. Cl.$^5$ : **B65G 57/24**

(21) Anmeldenummer : **89118169.5**

(22) Anmeldetag : **30.09.89**

(54) **Vorrichtung zum Ineinanderstapeln von Steigen.**

(30) Priorität : **04.11.88 DE 3837413**

(43) Veröffentlichungstag der Anmeldung :
**09.05.90 Patentblatt 90/19**

(45) Bekanntmachung des Hinweises auf die
Patenterteilung :
**11.11.92 Patentblatt 92/46**

(84) Benannte Vertragsstaaten :
**BE DE FR GB IT NL SE**

(56) Entgegenhaltungen :
**US-A- 4 592 692**

(73) Patentinhaber : **Leifeld & Lemke
Maschinenfabrik GmbH & Co. KG
Industriestrasse 77
W-4901 Hiddenhausen (DE)**

(72) Erfinder : **Hellmich, Gerhard
Westerbrink 17
W-4990 Lübbecke (DE)**
Erfinder : **Budde, Rolf
Niederacker 1
W-4972 Löhne 4 (DE)**

(74) Vertreter : **Stracke, Alexander, Dipl.-Ing. et al
Patentanwälte Dipl.-Ing. Loesenbeck Dipl.-Ing.
Stracke Jöllenbecker Strasse 164 Postfach 10
18 82
W-4800 Bielefeld 1 (DE)**

EP 0 366 943 B1

## Beschreibung

Die Erfindung betrifft eine Vorrichtung zum vorzugsweise lagenweisen Ineinanderstapeln von im Grundriß rechteckigen Steigen od. dgl. mit nach außen hin verlaufenden Stapelecken zur lagesicheren Aufnahme einer von oben eingesetzten Steige, mit einer die einzelnen Steigen einer Lage von einander gegenüberliegenden Seiten untergreifenden und wieder freigebenden Anordnung von Halteelementen, die zwischen einer Aufnahmestelle und einer Abgabestelle verfahrbar ist.

Stapelvorrichtungen der genannten Art sind aus der Praxis bekannt. Die Anordnung von Halteelementen besteht aus die Steigen von gegenüberliegenden Seiten her untergreifenden äußeren Tragwinkeln sowie aus inneren Traghaken zwischen den Steigenreihen. Zum Aufnehmen bzw. Freigeben der Steigen führen die äußeren Tragwinkel eine Schwenkbewegung aus, während die inneren Traghaken zum Aufnehmen bzw. Freigeben der Steigen um 90° in der Horizontalebene verdreht werden. Tragwinkel und Traghaken sind dabei derart angeordnet, daß sie die Steigen im Bereich zwischen den Steigenecken untergreifen.

Diese Stapelvorrichtungen arbeiten insofern nicht zufriedenstellend, als ein formschlüssiges Ineinandersetzen der Steigen nicht immer gewährleistet ist, was zu instabilen Steigenstapeln führt, wenn nicht ein manuelles Eingreifen erfolgt. Diese Unzulänglichkeit ist darauf zurückzuführen, daß die Ausrichtung der Steigen zueinander während ihres Transportes von der Aufnahmestelle zur Abgabestelle und während des Absetzens häufig verloren geht. Hinzu kommt, daß die Steigen vielfach aus einem labilen Material hergestellt sind und infolge dessen die Steigenecken nicht formstabil bleiben.

Die Aufgabe der Erfindung besteht darin eine Stapelvorrichtung der gattungsgemäßen Art zu schaffen, die bei einfacher Bauweise ein funktionssicheres Ineinanderstapeln der Steigen bei geringstmöglichem Abstand zwischen den Steigen sicherstellt. Darüber hinaus sollen mit der Stapelvorrichtung exakt ausgerichtete, stabile Steigenstapel gebildet werden.

Die Aufgabe wird erfindungsgemäß dadurch gelöst, daß die Halteelemente aus nebeneinanderliegenden einzelnen Klappflächen gebildet sind, die endseitig in die Steigen umschließende, divergierende Leitflächen übergehen, daß die Klappflächen gemeinsam um Drehachsen zwischen einer Horizontallage und einer Vertikallage zum Untergreifen und Freigeben der Steigen verschwenkbar sind und daß gegenüberliegende Klappflächen in der Vertikallage Zentrierrahmen für die abzusetzenden Steigen bilden, die beim Freigeben der Steigen in die Stapelecken der zuvor abgesetzten Steigen schwenken. Gemäß einer vorteilhaften Weiterbildung der Erfindung sind die außen liegenden Klappflächen zum gegenseitigen Ausrichten der Steigen in Längs- und Querrichtung in der Vertikallage zu den innen liegenden Klappflächen hin bewegbar.

Nachfolgend wird in den Zeichnungen die erfindungsgemäße Stapelvorrichtung anhand eines Ausführungsbeispiels näher erläutert. Es zeigen:

Fig. 1 eine Ansicht der Stapelvorrichtung von der Seite;

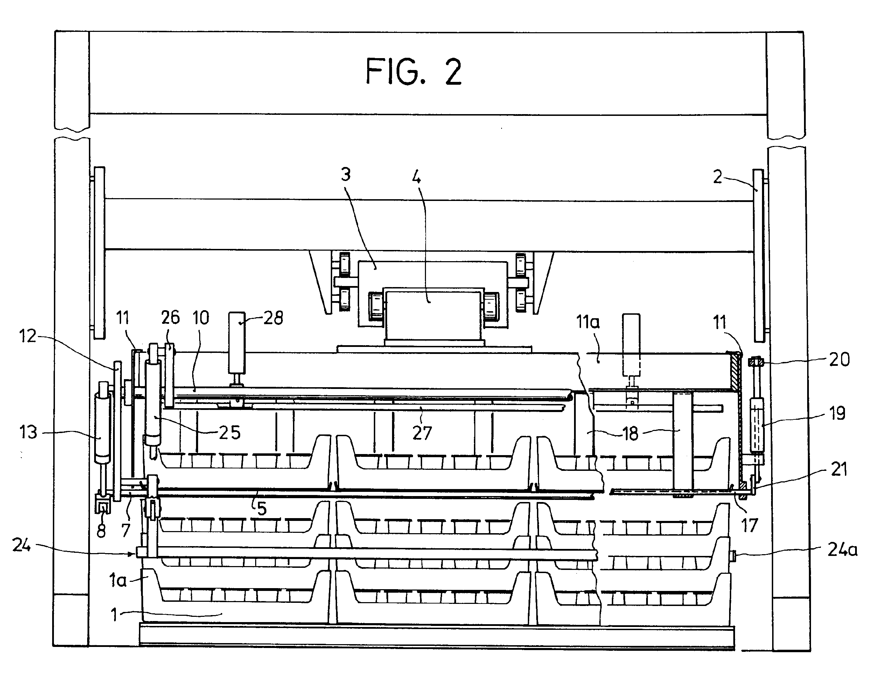

Fig. 2 eine Ansicht der Stapelvorrichtung von vorn;

Fig. 3 die Klappflächen in vertikaler Ausrichtstellung;

Fig. 4 die Klappflächen in horizontaler Haltestellung;

Fig. 5 die Klappflächen in der Abgabe- und Zentrierstellung;

Fig. 6 eine Ansicht auf die Steigenformation.

Die Stapelvorrichtung dient zum lagenweisen Ineinanderstapeln von im Grundriß rechteckigen Steigen 1 mit nach außen hin verlaufenden Stapelecken 1a zur lagesicheren Aufnahme der von oben eingesetzten Steigen.

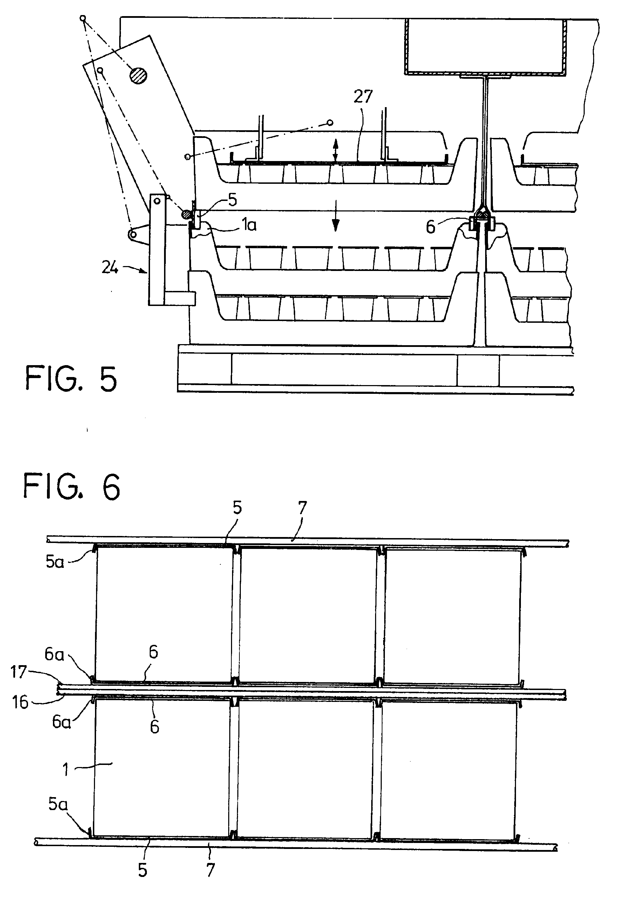

Wie aus Fig. 6 ersichtlich, besteht im vorliegenden Fall die Lage aus zwei Längsreihen und aus rechtwinklig dazu verlaufenden drei Querreihen von Steigen.

Die Stapelvorrichtung setzt sich im wesentlichen zusammen aus einem Grundgestell mit einem Portal, in dem ein vertikal verfahrbarer Hubschlitten 2 geführt ist. Der Hubschlitten 2 seinerseits nimmt in Horizontalrichtung auf Laufrollen bewegbare Ausleger 3 auf mit Führungsbahnen, in denen ein Wagen 4 horizontal läuft. An dem Wagen 4 ist eine Anordnung von Halteelementen 5 und 6 für die Steigen 1 aufgehängt, die zwischen einer Aufnahmestelle A und einer Abgabestelle B verfahrbar ist.

Die Anordnung von Halteelementen besteht aus in einer Reihe liegende einzelne Klappflächen 5, 6, die die Steigen 1 im randnahen Bereich jeweils von zwei einander gegenüberliegenden Seiten untergreifen und zur Aufnahme bzw. Abgabe aller Steigen einer Lage gemeinsam zwischen einer Horizontal- und Vertikallage verschwenkt werden. Wie aus Fig. 6 ersichtlich, gehen die Klappflächen 5, 6 endseitig in die Steigen umschließende, divergierende Leitflächen 5a, 6a über, wobei das Innenmaß zwischen den Leitflächen der Länge einer Steige entspricht, so daß die Steigen jeweils von zwei zusammenwirkenden Klappflächen spielfrei umgeben sind. Die in Reihe liegenden Klappflächen 5, 6 sind derart in gegenseitigem Abstand angeordnet, daß zwischen benachbarten Leitflächen 5a, 6a ein Bewegungsfreiraum verbleibt.

Wie die Zeichnungen veranschaulichen, sind Betätigungsmittel für die Klappflächen und für die nachfolgend beschriebenen Ausrichtelemente je auf gegenüberliegenden Seiten vorgesehen, und zwar in Längs- als auch in Querrichtung. Aus Gründen der Einfachheit wird in der nachfolgenden Beschreibung jedoch im wesentlich auf die Anordnung der Betätigungsmittel auf lediglich einer Seite Bezug genommen.

Die außen liegenden Klappflächen 5 sind an einer gemeinsamen Welle 7 befestigt, die endseitig in einem Schwenkhebel 12 gelagert ist, der seinerseits auf einer von Seitenteilen 11 getragenen Welle 10 gelagert ist. Die beiden Seitenteile 11 sind durch einen Querträger 11a verbunden, an dem der Wagen 4 gehalten ist.

Die innen liegenden Klappflächen 6 befinden sich jeweils auf einer Welle 16, 17, die unmittelbar nebeneinanderliegend von den Seitenteilen 11 aufgenommen sind. Um den Abstand zwischen den beiden Steigenreihen so gering als möglich zu halten, weisen die Wellen 16, 17 einen geringen Durchmesser auf, was infolgedessen eine zusätzliche Abstützung erforderlich macht. Hierzu sind in Abständen über die Wellenlänge verteilt Traglager 18 am Querträger 11a zwischen den Seitenteilen 11 vorgesehen. In einer abgewandelten Ausführungsform können die Klappflächen 6 auch scharnierartig auf einer gemeinsamen drehfesten Welle angeordnet sein und über Betätigungsmittel um die drehfeste Welle verschwenkt werden.

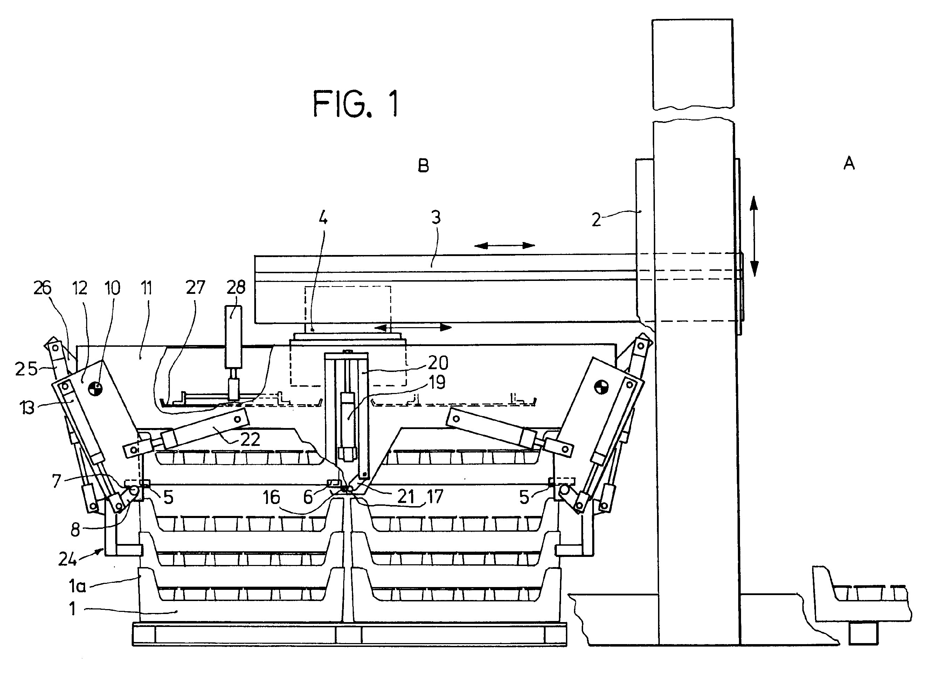

Wie die Figur 1 erkennen läßt, bilden die außen liegenden Klappflächen 5 mit der Schwenkwelle 7 und einem kurzen Hebel 8 eine starre Baueinheit, an die endseitig der Welle 7 ein vom Schwenkhebel 12 getragener Arbeitszylinder 13 angreift, über den die Klappflächen zwischen ihrer Vertikal- und Horizontallage verschwenkt werden.

Entsprechend dazu erhalten die innenliegenden Klappflächen 6 ihre Schwenkbewegung über einen Arbeitszylinder 19, der sich an dem Seitenteil 11 befindet und mit seiner Kolbenstange ein U-förmiges Konstruktionsteil 20 in vertikaler Ebene betätigt, dessen beidseitige Ausleger an Hebeln 21 angelenkt sind. Letztere bilden mit den innenliegenden Klappflächen 6 und den Schwenkwellen 16, 17 eine starre Baueinheit.

An einem von der Drehachse des Schwenkhebels 12 entfernt liegenden Anlenkpunkt im Schwenkhebel 12 greift ein weiterer Arbeitszylinder 22 an, der im Seitenteil 11 gehaltert ist. Mit Hilfe dieses Arbeitszylinders lassen sich die von den Schwenkhebeln 12 getragenen außen liegenden Klappflächen 5 um eine definierte Wegstrecke zur Mitte der Stapelvorrichtung hin schwenken.

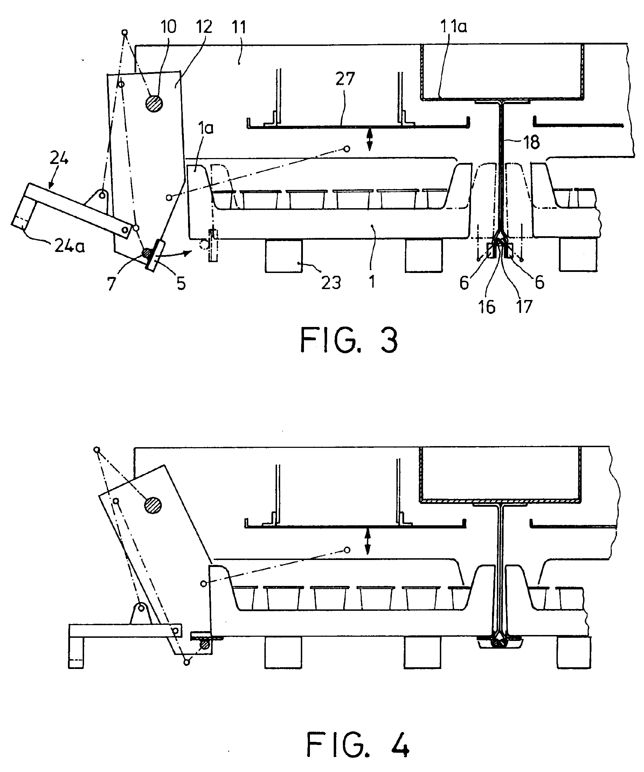

Die der Aufnahmestelle A von nicht dargestellten Transporteuren auf Zufuhrbahnen 23 in zwei nebeneinanderliegenden Reihen zugeführten, zu einer Lage bereitgestellten Steigen 1 werden durch Heranschwenken der sich in Vertikalstellung befindenden außenliegenden Klappflächen 5 über die Arbeitszylinder 22 zur Mitte der Stapelvorrichtung hin verschoben und somit in Querrichtung über die zusammenwirkenden divergierenden Leitflächen 5a, 6a der jeweiligen Klappflächen 5, 6 sowie gleichzeitig in Längsrichtung über die Klappflächen 5, 6 selbst ausgerichtet. Wie anhand der Figur 3 verdeutlicht, nehmen die Steigen 1 nach dem Verschieben von den beiden Seiten zur Mitte hin und damit nach dem Ausrichtvorgang die strichpunktiert dargestellte Position unter Anlage an den mittigen Traglagern 18 ein.

Mit der Schwenkbewegung der Klappflächen 5, 6 aus der Vertikal- in die Horizontallage, ausgeführt über die Arbeitszylinder 13, werden alle Steigen einer Lage gemeinsam aufgenommen, wie Figur 4 zeigt, und zur Abgabestelle B über eine zuvor abgesetzte Steigenlage gebracht sowie bis auf einen definierten Abstand zur unteren Lage abgesenkt. Der Abstand zwischen der bereits abgesetzten Lage zur abzusetzenden Lage ist dabei derart gewählt, daß sich die die Steigen tragenden Klappflächen 5, 6 mit Leitflächen 5a, 6a nach dem Zurückschwenken zur Freigabe der Steigen aus der Horizontallage in die Vertikallage in die Stapelecken der zuvor abgesetzten Steige legen und somit Zentrierrahmen für die freikommenden Steigen bilden, siehe Figur 5, was ein formschlüssiges Ineinanderstapeln der Steigen gewährleistet.

Die erfindungsgemäße Stapelvorrichtung ist zusätzlich mit einer Einrichtung zum Vorausrichten versehen mit Ausrichtelementen 24, die von gegenüberliegenden Längsseiten auf die jeweils zuvor abgesetzte Steigenlage einwirken, bevor eine folgende Lage von Steigen zum Stapeln freigegeben wird. Dieses Vorausrichten kann unter Umständen erforderlich sein, wenn aufgrund einer nicht ebenen Auflagefläche die Steigen schief stehen. Die Ausrichtelemente 24 besitzen Anlageflächen mit abgewinkelten, divergierenden Leitflächen 24a, wobei der Abstand zwischen den Leitflächen der Länge der Steigenlage entspricht. Die Bewegung der an den Schwenkhebeln 12 gelagerten Ausrichtelemente 24 zur Mitte der Stapelvorrichtung hin erfolgt über einen Arbeitszylinder 25, der zwischen dem Ausrichtelement 24 und der Welle 10 unter Zwischenschaltung eines Hebels 26 angeordnet ist.

Schließlich kann die Stapelvorrichtung noch mit Niederhalteelementen 27 versehen sein, die sich je über die Steigenreihe erstrecken und die über Arbeitszylinder 28 auf die Steigen 1 absenkbar sind mit der Aufgabe, bei extrem leichten Steigen ein Durchschieben durch die von den Klappflächen 5, 6 gebildeten Zentrierrahmen zu ermöglichen.

## Patentansprüche

1.  Vorrichtung zum vorzugsweise lagenweisen Ineinanderstapeln von im Grundriß rechteckigen Steigen (1) od. dgl. mit nach außen hin verlaufenden Stapelecken (1a) zur lagesicheren Aufnahme einer von oben eingesetzten Steige mit einer die einzelnen Steigen einer Lage von einander gegenüberliegenden Seiten untergreifenden und freigebenden Anordnung von Halteelementen (5,6), die zwischen einer Aufnahmestelle und einer Abgabestelle verfahrbar ist, dadurch gekennzeichnet, daß die Halteelemente aus nebeneinanderliegenden einzelnen Klappflächen (5, 6) gebildet sind, die endseitig in die Steigen umschließende, divergierende Leitflächen (5a, 6a) übergehen, daß die Klappflächen (5, 6) gemeinsam um Drehachsen (7,16,17) zwischen einer Horizontallage und einer Vertikallage zum Untergreifen und Freigeben der Steigen (1) verschwenkbar sind und daß gegenüberliegende Klappflächen (5, 6) in der Vertikallage Zentrierrahmen für die abzusetzenden Steigen (1) bilden, die beim Freigeben der Steigen (1) in die Stapelecken (1a) der zuvor abgesetzten Steigen (1) schwenken.

2. Vorrichtung nach Anspruch 1, dadurch gekennzeichnet, daß die außen liegenden Klappflächen (5) zum gegenseitigen Ausrichten der Steigen (1) in Längs- und Querrichtung in der Vertikallage zu den innen liegenden Klappflächen (6) hin bewegbar sind.

3. Vorrichtung nach Anspruch 1 und 2, gekennzeichnet durch zwei unmittelbar nebeneinanderliegende Schwenkwellen (16, 17), an denen sich die jeweils inneren Klappflächen (6) befinden, wobei die Schwenkwellen (16, 17) von gemeinsamen Traglagern (18) aufgenommen sind.

4. Vorrichtung nach Anspruch 1 und 2, dadurch gekennzeichnet, daß in Längsrichtung fluchtende Klappflächen (6) scharnierartig auf einer gemeinsamen drehfesten Welle (16;17) angeordnet und über Betätigungsmittel (19,21) um die drehfeste Welle verschwenkbar sind.

5. Vorrichtung nach Anspruch 1 bis 4, gekennzeichnet durch Ausrichtleisten (24) mit endseitigen, die Steigenlage umschließenden, divergierenden Leitflächen (24a), die über Betätigungsmittel (25, 26) in zeitlicher Abstimmung mit der Schwenkbewegung der Klappflächen (5, 6) gegen die abgesetzte Steigenlage von einander gegenüberliegenden Seiten fahrbar sind.

6. Vorrichtung nach Anspruch 1 bis 5, gekennzeichnet durch über Betätigungsmittel (28) in zeitlicher Abstimmung mit der Schwenkbewegung der Klappflächen (5, 6) von oben auf die freizugebenden Steigenreihen einwirkende Niederhalteelemente (27).

## Claims

1. Apparatus for the preferably layer-wise interengaging stacking of crates (1) or the like which are rectangular in plan, with outwardly extending stacking corners (1a) for positionally securely receiving a crate which is inserted from above, comprising an arrangement of holding elements (5, 6) for engaging under and releasing the individual crates of a layer from mutually oppositely disposed sides, which arrangement is movable between a pick-up position and a delivery position, characterised in that the holding elements are formed from mutually juxtaposed individual pivotal surfaces (5, 6) which at the ends go into divergent guide surfaces (5a, 6a) which embrace the crates, that the pivotal surfaces (5, 6) are jointly pivotable about axes of rotation (7, 16, 17) between a horizontal position and a vertical position for engaging under and releasing the crates (1) and that oppositely disposed pivotal surfaces (5, 6) in the vertical position form centering frames for the crates (1) to be set down, which upon release of the crates (1) pivot into the stacking corners (1a) of the previously set-down crates (1).

2. Apparatus according to claim 1 characterised in that the outwardly disposed pivotal surfaces (5) are movable for mutual alignment of the crates (1) in the longitudinal and transverse directions in the vertical position relative to the inwardly disposed pivotal surfaces (6).

3. Apparatus according to claim 1 and claim 2 characterised by two pivot shafts (16, 17) which are disposed in directly juxtaposed relationship and on which are disposed the respective inner pivotal surfaces (6), the pivot shafts (16, 17) being carried by common support mountings (18).

4. Apparatus according to claim 1 and claim 2 characterised in that pivotal surfaces (6) which are aligned in the longitudinal direction are arranged hingedly on a common non-rotatable shaft (16; 17) and are pivotable about the non-rotatable shaft by way of actuating means (19, 21).

5. Apparatus according to claims 1 to 4 characterised by alignment bars (24) with divergent guide surfaces (24a) at the ends, which enclose the crate layer, and which are movable by way of actuating means (25, 26) synchronously in respect of time with the pivotal movement of the pivotal surfaces (5, 6) against the set-down layer of crates from mutually opposite sides.

6. Apparatus according to claims 1 to 5 characterised by hold-down elements (27) which act by way of actuating means (28) synchronously in respect of time with the pivotal movement of the pivotal surfaces (5, 6) from above on the rows of crates to be released.

## Revendications

1. Dispositif pour emboîter des caisses à claire-voie ou analogues, à profil rectangulaire, placées de préférence par couches, avec des angles de claire-voie s'évasant vers l'extérieur, en vue de recevoir, fixée en position, l'une des caisses à claire-voie insérée par le haut, avec un dispositif d'éléments de maintien (5,6), saisissant par le dessous les différentes caisses à claire-voie d'une couche, par les faces opposées, et déplaçable entre une position de réception et une position de dépose, caractérisé en ce que les éléments de maintien sont formés de faces rabattables (5,6) individuelles situées les unes à côté des autres, qui se transforment côté extrémité en faces de guidage (5a,6a) divergentes qui entourent les caisses à claire-voie, en ce que les faces rabattables (5,6) sont pivotantes conjointement autour d'axes de rotation (7,16,17), entre une position horizontale et une position verticale, en vue de saisir par le dessous et de libérer les caisses à claire-voie (1) et en ce que des faces rabattables (5,6) opposées forment, en position verticale, des cadres de centrage pour les caisses à claire-voie (1) à déposer qui pivotent lors de la libération des caisses à claire-voie (1), dans les angles de pile (1a) des caisses à claire-voie (1) déposées auparavant.

2. Dispositif selon la revendication 1, caractérisé en ce que les faces rabattables (5) situées à l'extérieur sont déplaçables par rapport au faces rabattables (6) situées à l'intérieur, en vue d'orienter mutuellement les caisses à claire-voie (1) en direction longitudinale et transversale, dans la position verticale.

3. Dispositif selon les revendications 1 et 2, caractérisé par deux arbres de pivotement (16,17), situées directement l'un à côté de l'autre, sur lesquels se trouvent les faces rabattables (6) intérieures, les arbres de pivotement (16,17) étant supportés par des paliers support (18) communs.

4. Dispositif selon les revendications 1 et 2, caractérisé en ce que les faces rabattables (6) alignées dans la direction longitudinale sont disposées en charnières sur un arbre (16;17) commun, bloqué en rotation et susceptibles de pivoter, par l'intermédiaire de moyens d'actionnement (19,21), autour de l'arbre bloqué en rotation.

5. Dispositif selon les revendications 1 à 4, caractérisé par des bandes d'orientation (24), équipées, côté extrémité, de faces de guidage (24a) divergentes qui entourent la couche de caisses à claire-voie et sont susceptibles d'être déplacées, par l'intermédiaire de moyens d'actionnement (25,26), en liaison temporelle avec le mouvement de pivotement des faces rabattables (5,6) contre la couche de caisses à claire-voie, par les côtés opposés.

6. Dispositif selon les revendications 1 à 5, caractérisé par des éléments serre-flan (27), agissant par le haut sur les rangées de caisses à claire-voie à libérer, par l'intermédiaire de moyens d'actionnement (28), en liaison temporelle avec le mouvement de pivotement des faces rabattables (5,6).

FIG. 1

EP 0 366 943 B1

FIG. 2

FIG. 3

FIG. 4

FIG. 5

FIG. 6